# FASCICULE DE BREVET EUROPEEN

(11) **EP 4 058 689 B1**
(45) Date de publication et mention de la délivrance du brevet: **21.02.2024**
(21) Numéro de dépôt: 20816286.7
(22) Date de dépôt: 06.11.2020
(51) Int. Cl.: F16H 57/04, F01D 25/18, F02C 7/36, F02C 7/06

(54) **ROUET POUR UN PORTE-SATELLITES DE REDUCTEUR DE VITESSE A TRAIN EPICYCLOÏDAL DE TURBOMACHINE**
LAUFRAD FÜR EINEN PLANETENTRÄGER EINES GETRIEBES MIT EPIZYKLOIDENGETRIEBE EINER TURBOMASCHINE
IMPELLER FOR A PLANETARY CARRIER OF A SPEED REDUCER WITH EPICYCLOIDAL GEAR OF A TURBO-MACHINE

(30) Priorité: 15.11.2019 FR 1912783
(43) Date de publication de la demande: 21.09.2022
(73) Titulaire: SAFRAN AIRCRAFT ENGINES, 75015 Paris (FR); Safran Transmission Systems, 92700 Colombes (FR)
(72) Inventeur: KUBIAK, Guillaume Patrice, 77550 MOISSY-CRAMAYEL (FR); BECOULET, Julien Fabien Patrick, 77550 MOISSY-CRAMAYEL (FR); CUVILLIER, Romain Guillaume, 77550 MOISSY-CRAMAYEL (FR); LEFEBVRE, Simon Loïc Clément, 77550 MOISSY-CRAMAYEL (FR); PATSOURIS, Emmanuel Pierre Dimitri, 77550 MOISSY-CRAMAYEL (FR); YVON, Didier Jean-Louis, 77550 MOISSY-CRAMAYEL (FR)
(74) Mandataire: Gevers & Orès
(86) Numéro de dépôt international: PCT/FR2020/052031
(87) Numéro de publication internationale: WO 2021/094677

(56) Documents cités:
- WO-A1-2018/189457
- US-A1- 2013 313 053
- US-A1- 2018 306 293
- US-A1- 2019 032 514
- US-A1- 2019 085 972
- US-A1- 2019 301 466

## Description

### Domaine technique de l'invention

La présente invention concerne notamment un rouet pour un porte-satellites d'un réducteur de vitesse à train épicycloïdal de turbomachine.

### Arrière-plan technique

L'état de la technique dans ce domaine comprend notamment les documents FR-A1-3 036 763, FR-A1-3 047 279, FR-A1-3 041 054, FR-A1-3 065 773, WO-A1-2015/008000, US-A1-2019/301466, US2013313053A1, US-A1-2018/306293, US-A1-2019/032514, WO-A1-2018/189457, US-B2-8,911,318 et WO-A1-2018/185186.

Un réducteur de vitesse à train épicycloïdal d'une turbomachine d'aéronef comprend classiquement un solaire accouplé à un premier arbre et une couronne s'étendant autour du solaire. Des satellites sont disposés entre le solaire et la couronne et sont engrenés avec eux et portés par un porte-satellites accouplé à un second arbre.

La figure 1 illustre un porte-satellites 10 tel que décrit dans la demande FR-A1-3 036 763. Ce porte-satellites 10 comprend un corps cylindrique 12 destiné à être accouplé au second arbre et relié à une extrémité longitudinale à une paroi annulaire 14 de support d'axes 16 parallèles de rotation des satellites 18. Les axes 16 sont régulièrement répartis autour de l'axe A de rotation du porte-satellites et sont solidaires à l'une de leurs extrémités longitudinales de la paroi annulaire 14 précitée. Un rouet 20 est rapporté et fixé aux extrémités longitudinales opposées des axes 16.

Le rouet 20 est solidaire du porte-satellites 10 du fait de sa liaison aux axes 16 de support des satellites 18. Le rouet 20 est donc destiné à être mis en rotation en fonctionnement autour de l'axe A en étant solidarisé au rotor du réducteur.

Le rouet 20 a une forme générale annulaire autour de l'axe A et comporte à sa périphérie externe des raccords hydrauliques aux axes 16 de rotation des satellites 18. Le rouet 20 comprend des moyens de lubrification, d'une part, des paliers montés entre les axes 16 et les satellites 18, et, d'autre part, des dents d'engrènement des satellites 18 et du solaire 22. Ces moyens de lubrification comportent une gorge annulaire 24 située à la périphérie interne du rouet 20 et débouchant radialement vers l'intérieur, c'est-à-dire vers l'axe A.

On connaît également des moyens de lubrification, tels que ceux décrits dans le document US-A1-2019/0301466, qui comportent un ou plusieurs gicleurs d'huile agencés régulièrement autour de l'axe du réducteur et orientés dans une direction radiale. Ces moyens de lubrification sont pourvus d'une pluralité de cavités également réparties autour du réducteur.

Il existe par ailleurs, d'autres moyens de lubrification tels que ceux décrits dans le document US-A1-2013/0313053 qui permettent l'alimentation en huile d'un frein de véhicule muni d'un réducteur.

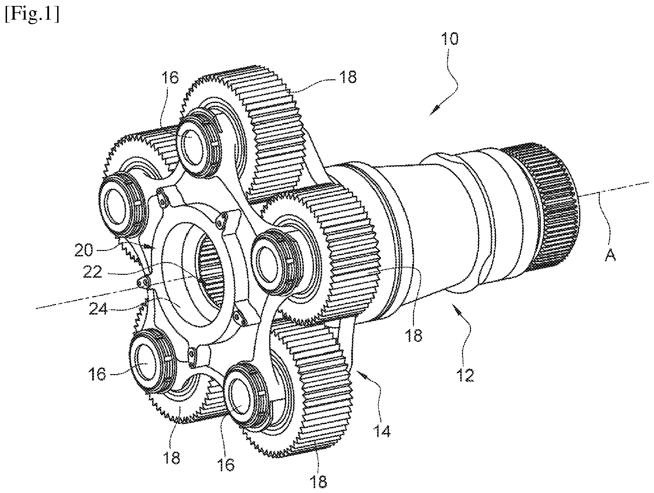

D'autres gicleurs de lubrifiant, portés par un stator du réducteur ou de la turbomachine, sont disposés radialement à l'intérieur du rouet (ils ne sont pas représentés dans la figure 1), et projettent du lubrifiant directement dans la gorge 24 du rouet, pour alimenter les moyens de lubrification.

Le lubrifiant est amené jusqu'aux gicleurs par une pompe d'un groupe de lubrification de la turbomachine, qui délivre un débit prédéterminé de lubrifiant aux gicleurs. Avec la technologie actuelle décrite ci-dessus, le lubrifiant projeté dans la gorge est acheminé jusqu'aux moyens de lubrification par effet centrifuge uniquement.

Le rouet distribue donc de l'huile sous pression dans le réducteur en se servant des forces centrifuges générées en fonctionnement.

Cependant, la pression d'huile dans le rouet dépend de la hauteur de la colonne d'huile et de la vitesse de rotation du rouet. Une solution pour augmenter la pression d'huile consiste donc à augmenter la hauteur de la colonne d'huile en diminuant le diamètre intérieur du rouet. Cependant, l'intérieur du rouet est encombré par les gicleurs de lubrifiant dans la gorge du rouet. Par ailleurs, ces gicleurs de lubrifiant sont encombrants et risquent de venir au contact du premier arbre engrené avec le solaire du réducteur. La présente invention propose un perfectionnement à cette technologie, qui apporte une solution simple, efficace et économique au problème de lubrification d'un réducteur à train épicycloïdal.

### Résumé de l'invention

Conformément à l'invention, on parvient à cet objectif avec un ensemble pour une turbomachine d'aéronef, comprenant :
- un réducteur de vitesse à train épicycloïdal, et
- au moins un gicleur d'huile configuré pour projeter un jet d'huile orienté dans une direction comportant au moins une composante parallèle à un axe longitudinal de la turbomachine,
ledit réducteur comportant un porte-satellites équipé d'un rouet qui est rouet pour un porte-satellites de réducteur de vitesse à train épicycloïdal de turbomachine, ledit rouet étant destiné à être solidaire en rotation dudit porte-satellites et à être mis en rotation autour d'un axe A dudit réducteur, ledit rouet ayant une forme annulaire autour dudit axe et comportant des moyens de lubrification notamment de paliers de satellites dudit réducteur, lesdits moyens de lubrification comportant une cavité annulaire située à la périphérie interne dudit rouet, le rouet comportant une paroi périphérique interne de fermeture en direction radiale de ladite cavité, et le rouet comprenant une lumière annulaire qui s'étend autour dudit axe et qui débouche en direction axiale dans ladite cavité en vue de son alimentation en huile de lubrification par ledit jet d'huile qui est destiné à traverser cette lumière, ladite cavité étant délimitée axialement par deux parois latérales annulaires, une première de ces parois étant reliée à sa périphérie interne à ladite paroi de fermeture, et la seconde de ces parois comportant ladite lumière ou ayant sa périphérie interne qui est espacée radialement de ladite paroi de fermeture afin de définir ladite lumière, et ladite cavité comprenant des ailettes de guidage d'huile, qui sont configurées pour guider l'huile et limiter ses perturbations en fonction du sens de rotation du rouet.

L'invention propose ainsi un rouet centrifuge à injection axiale, c'est-à-dire que de l'huile est amenée dans la cavité du rouet par projection de cette huile en direction axiale à travers la lumière du rouet. Cette huile se retrouve dans la cavité du rouet et est ensuite centrifugée pour alimenter les moyens de lubrification. Il n'est ainsi plus nécessaire de prévoir un gicleur ou autre à l'intérieur du rouet, ce qui évite d'encombrer l'intérieur du rouet et limite le risque d'interaction avec l'arbre qui est accouplé au solaire du réducteur. L'ensemble selon l'invention peut comprendre une ou plusieurs des caractéristiques suivantes, prises isolément les unes des autres, ou en combinaison les unes avec les autres :
- ladite cavité comprend une surface annulaire interne ayant en section une forme incurvée dont une concavité est située à l'intérieur de ladite cavité et située axialement en regard de ladite lumière ; cette surface peut être complexe ; elle redirige radialement l'huile de préférence ;
- ladite surface annulaire est située à la jonction entre ladite première paroi et ladite paroi de fermeture ;
- les ailettes sont situées au moins sur ladite surface annulaire ;
- lesdits moyens de lubrification comportent des canalisations d'huile principalement radiales débouchant dans ladite cavité ; de préférence, les extrémités radialement internes de ces canalisations débouchent dans la cavité ;
- au moins certaines des canalisations comprennent des extrémités radiales qui sont configurées pour être en communication fluidique avec des cavités internes de lubrification de paliers ; de préférence, les extrémités radialement externes de ces canalisations débouchent dans la cavité ;
- lesdites canalisations sont régulièrement réparties autour dudit axe ;
- au moins certaines desdites canalisations sont en communication fluidique avec des premières extrémités longitudinales de gicleurs de lubrifiant, qui sont montés en porte-à-faux à la périphérie externe du rouet ;
- le rouet comprend des bras sensiblement radiaux comportant ou portant à leurs extrémités, de préférence radialement externes, des moyens de support des axes des satellites, au moins certaines des canalisations étant formées dans ces bras ;
- lesdites ailettes ont chacune une forme générale incurvée ;
- chacune des ailettes comprend une extrémité radialement interne orientée tangentiellement par rapport à une circonférence centrée sur l'axe, et une extrémité radialement externe orientée radialement par rapport à cet axe ;
   -- le jet d'huile peut être incliné par rapport à l'axe précité ; et
- ledit au moins un gicleur peut avoir une extrémité radialement interne qui est située sur une circonférence dont un diamètre est supérieur à un diamètre interne dudit rouet, la direction du jet d'huile comportant également une composante radiale de sorte que cette direction soit inclinée par rapport audit axe longitudinal.

La présente invention concerne également une turbomachine d'aéronef comportant un ensemble tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'un porte-satellites de la technique antérieure,
[Fig.2] La figure 2 représente schématiquement une coupe axiale d'une turbomachine utilisant l'invention ;
[Fig.3] La figure 3 présente une vue détaillée en coupe d'un réducteur à train épicycloïdal ;
[Fig.4] La figure 4 est une vue éclatée, en perspective, du réducteur de la figure 3 ;
[Fig.5] La figure 5 présente une coupe schématique d'un rouet du réducteur de la figure 3 ;
[Fig.6] la figure 6 est une vue schématique partielle en perspective et en coupe axiale d'un rouet selon un mode de réalisation de l'invention ;
[Fig.7] la figure 7 est une vue très schématique à plus grande échelle d'une partie d'une surface annulaire interne de guidage du rouet de la figure 6 ; et
[Fig.8] la figure 8 est une vue schématique partielle en perspective et en coupe axiale d'un rouet selon une variante de réalisation de l'invention.

### Description détaillée de l'invention

La figure 1 a été décrite dans ce qui précède et représente la technique antérieure à la présente invention.

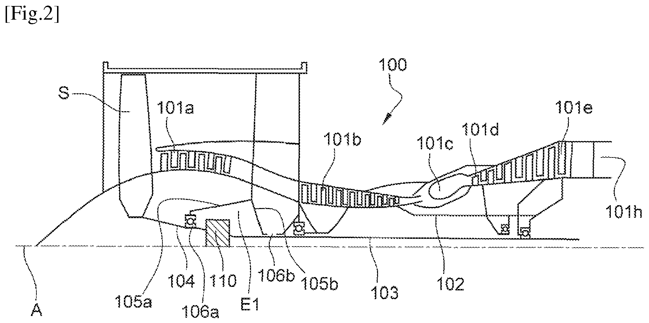

Les figures 2 à 5 illustrent également la technique antérieure telle que décrite dans le document FR-A1-3 041 054 de la Demanderesse.

La figure 1 montre une turbomachine 100 qui comporte, de manière classique, une hélice de soufflante S, un compresseur basse pression 101a, un compresseur haute pression 101b, une turbine haute pression 101d, une turbine basse pression 101e et une tuyère d'échappement 101h. Le compresseur haute pression 101b et la turbine haute pression 101d sont reliés par un arbre haute pression 102 et forment avec lui un corps haute pression (HP). Le compresseur basse pression 101a et la turbine basse pression 101e sont reliés par un arbre basse pression 103 et forment avec lui un corps basse pression (BP).

L'hélice de soufflante S est entraînée par un arbre de soufflante 104 qui est couplé à l'arbre BP 103 au moyen d'un réducteur 110 à train épicycloïdal représenté ici schématiquement.

Le réducteur 110 est positionné dans la partie amont de la turbomachine. Dans la présente demande, les termes « amont » et « aval » font référence à l'écoulement des gaz dans la turbomachine.

Une structure fixe comportant schématiquement, ici, une partie amont 105a et une partie aval 105b est agencée de manière à former un enceinte E1 entourant le réducteur 110. Cette enceinte E1 est ici fermée en amont par des joints au niveau d'un palier 106a permettant la traversée de l'arbre de soufflante 104, et en aval par des joints au niveau de la traversée 106b de l'arbre BP 103.

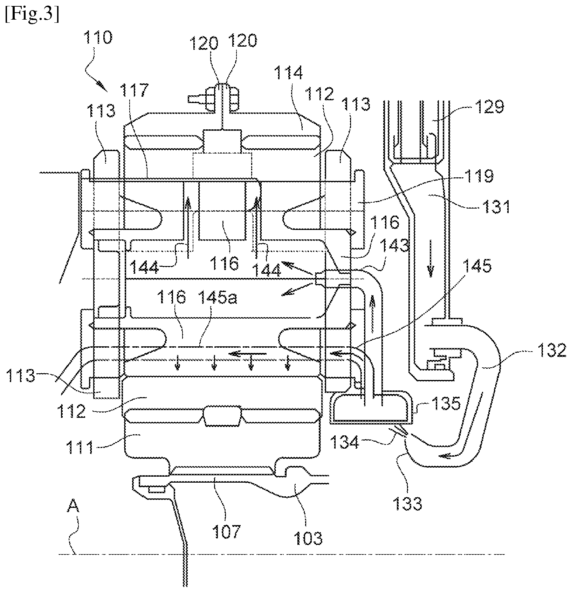

En référence aux figures 2 et 3, le réducteur est enfermé dans une couronne 114 qui est fixée par l'intermédiaire d'un carter de support 120 à ladite structure fixe 105a, 105b avec des moyens souples agencés pour lui permettre de suivre les mouvements éventuels de l'arbre de soufflante 104, dans certains cas de fonctionnement dégradés par exemple. Ces moyens de fixation sont connus de l'homme du métier et ne sont pas détaillés ici. Une brève description peut en être trouvée par exemple dans le document FR-A1-2 987 416.

Le réducteur 110 de l'exemple considéré embraye d'une part sur l'arbre BP 103 par l'intermédiaire de cannelures 107 qui entraînent un pignon d'engrenage planétaire 111, et d'autre part sur l'arbre de soufflante 104 qui est attaché à un porte-satellites 113. Classiquement, le pignon planétaire 111, dont l'axe de rotation A est confondu avec celui de la turbomachine, entraîne une série de pignons de satellites 112, qui sont répartis régulièrement sur la circonférence du réducteur 110. Le nombre de satellites 112 est généralement défini entre trois et six. Les pignons de satellites 112 tournent aussi autour de l'axe A de la turbomachine, en engrenant sur des dents internes de la couronne 114, qui est montée fixe par rapport à la turbomachine, par l'intermédiaire du carter de support 120. Chacun des satellites 112 tourne librement autour d'un axe de satellite 116 relié au porte-satellite 113, à l'aide d'un palier qui peut être lisse, comme représenté sur la figure 3, ou un palier à éléments roulants (roulements à billes ou à rouleaux). La rotation des satellites 112 autour de leur axe de satellite 116, du fait de la coopération de leurs pignons avec les dents de la couronne 114, entraîne la rotation du porte-satellites 113 autour de l'axe A, et par conséquent celle de l'arbre de soufflante 104 qui lui est lié, à une vitesse de rotation qui est inférieure à celle de l'arbre BP 103.

L'entraînement de l'arbre de soufflante 104 par le porte-satellites 113 est assuré par une série de doigts de centrage 117, répartis régulièrement sur la circonférence du réducteur 110, qui s'étendent axialement de l'extrémité aval de l'arbre de soufflante 104 et qui s'enfoncent dans des alésages pratiqués dans le porte-satellites 113. Le porte-satellites 113 s'étend symétriquement de part et d'autre des axes de satellite 116 et forme une enceinte dans laquelle pourra être mise en oeuvre une fonction de lubrification des engrenages. Des douilles 119 de fermeture, aux extrémités des axes de satellites 116, permettent de fermer cette enceinte au niveau des paliers des satellites 112.

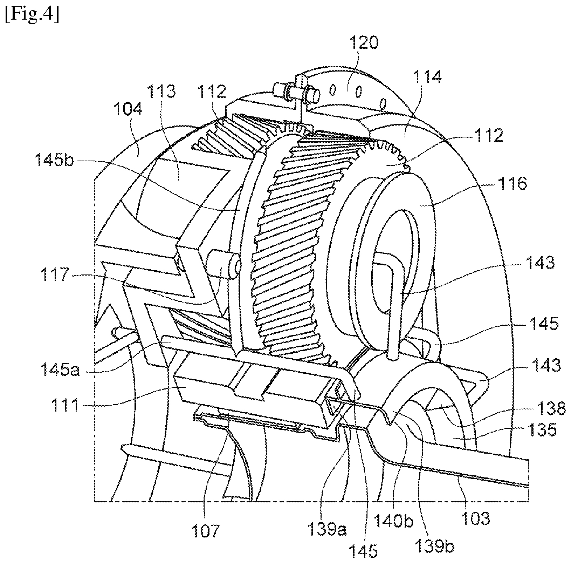

La figure 3 montre, avec la figure 4, l'acheminement de l'huile vers le réducteur 110 et son cheminement à l'intérieur de celui-ci. Des flèches montrent sur la figure 3 le cheminement suivi par l'huile depuis, sur cet exemple, un réservoir tampon 131 lié à la structure fixe de la turbomachine, jusqu'aux pignons et aux paliers à lubrifier. Le dispositif de lubrification comporte schématiquement trois parties qui vont être décrites ci après successivement, une première partie liée à la structure fixe et délivrant l'huile vers les parties tournantes du réducteur 110, un rouet tournant avec le porte-satellites 113 réceptionnant cette huile, et des circuits de distribution d'huile alimentés en huile par le rouet pour l'acheminer vers les endroits à lubrifier. La première partie comporte au moins un injecteur 132 dont l'extrémité calibrée est resserrée pour former un gicleur 133. L'huile est amenée vers l'injecteur par une canalisation d'acheminement 129, en provenance du réservoir du moteur (non représenté). Un réservoir tampon 131 peut être interposé à côté du réducteur 110 sur la canalisation, de préférence en partie haute de façon à ce que l'huile puisse s'écouler vers le centre du réducteur par gravité. Le gicleur 133 éjecte l'huile sous la forme d'un jet 134, qui se forme sous la pression produite conjointement par la pompe d'alimentation (non représentée) et par le poids de la colonne d'huile située au-dessus de lui. Le gicleur 133 est positionné ici radialement à l'intérieur du porte-satellites 113 par rapport à l'axe A et le jet 134 est orienté avec une composante radiale dirigée vers l'extérieur du réducteur 110.

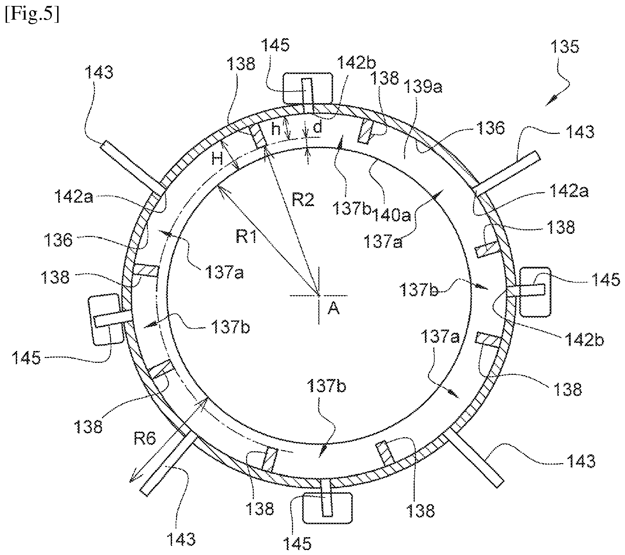

En référence aux figures 4 et 5, le rouet 130 de réception de l'huile lié au porte-satellites 113 comporte essentiellement une coupelle cylindrique 135, ici à section radiale en U, dont l'ouverture en U est orientée en direction de l'axe de rotation A. Le rouet 130 est agencé sur le porte-satellites 113 de manière à ce que le fond 136 du U de la coupelle 135 recueille le jet d'huile 134 éjecté par le gicleur 133.

Selon l'invention, la coupelle 135 du rouet 130 est ici divisée en une succession circonférentielle de cuvettes 137a, 137b séparées par des parois 138 orientées radialement et s'étendant axialement entre les deux parois latérales 139a, 139b du U formé par la coupelle 135. Sur l'exemple présenté, les parois de séparation circonférentielle 138 délimitent deux séries alternées de quatre cuvettes 137a, 137b, avec une extension circonférentielle identique dans une série mais différente d'une série à l'autre.

Par centrifugation, lorsque le rouet 130 tourne avec le porte-satellites 113, l'huile réceptionnée sur le fond 136 de la coupelle 135 est entraînée en rotation et mise en pression entre le fond 136 et les parois latérales 139a, 139b de la coupelle 135. Chaque cuvette 137a, 137b, en passant successivement devant le gicleur 133 au cours de la rotation, recueille une quantité d'huile proportionnelle à son extension circonférentielle. En effet, les bords radialement intérieurs des parois 139a-139b-138 d'une cuvette 137a, 137b définissent une surface d'entrée de la cuvette selon la direction radiale. Cette huile reste confinée entre les parois 138, 139a, 139b de la cuvette 137a, 137b tant que le niveau d'huile par rapport au fond 136 reste inférieur à la hauteur minimale h des parois 138 de celle-ci par rapport au fond 136. Les bords radiaux internes 140a, 140b des parois latérales 139a, 139b sont sensiblement circulaires. Leur rayon R1 définit une profondeur générale H de la coupelle 135 par rapport au fond 136. De préférence, les parois de séparation circonférentielle 138 ont un bord radial interne 141 situé à une distance R2 de l'axe A légèrement supérieure au rayon R1 des bords internes 140a, 140b des parois latérales 139a, 139b. La hauteur h des parois 138 de séparation circonférentielle par rapport au fond 136 des cuvettes 137a, 137b est donc légèrement inférieure à la hauteur H des parois latérales 139a, 139b par rapport à ce même fond 136.

Par ailleurs le fond 136 de chaque cuvette 137a, 137b comporte une ouverture 142a, 142b qui communique avec une canalisation 143, 145 d'un circuit de distribution d'huile installé sur le porte-satellites 113.

En référence aux figures 4 et 5, les circuits de distribution d'huile sont ici de deux types. Une première série de circuits de distribution d'huile correspond à des premières canalisations 143, qui sont réparties régulièrement sur la circonférence du réducteur 110 et en nombre égal à celui des satellites 112. Ces canalisations 143 partent radialement de l'ouverture 142a du fond de la première série de cuvettes 137a et pénètrent dans l'enceinte interne de chaque arbre de satellite 116, qui est refermée par le porte-satellites 113. L'huile qui circule dans les premières canalisations 143 pénètre dans la cavité interne de chaque axe de satellite 116 puis passe, du fait de la force centrifuge, dans des canaux de guidage 144, qui traversent ces axes de satellite 116 en étant orientés radialement. Ces canaux 144 débouchent à la périphérie des axes de satellites 116, au niveau des paliers supportant les pignons des satellites 112 et assurent ainsi la lubrification de ces paliers (figure 3).

La deuxième série de circuits de distribution d'huile comprend des secondes canalisations 145 qui cheminent, depuis les ouvertures 142b du fond des cuvettes 137b de la deuxième série de cuvettes entre les satellites 112 et se divisent en plusieurs canaux 145a, 145b. Les canaux 145a, 145b acheminent l'huile vers les engrenages formés par les pignons des satellites 112 et le pignon planétaire 111, d'une part, et les pignons des satellites 112 et la couronne externe 114, d'autre part. Chaque canal 145a s'étend axialement le long des pignons d'un satellite 112, entre ceux-ci et le planétaire 111, et forme une rampe de lubrification sur toute la largeur des pignons. Le canal 145b, qui alimente l'engrenage entre la couronne 114 et les pignons des satellites 112, projette son huile au centre du cylindre formé par chaque satellite 112. Comme représenté, chaque satellite 112 est réalisé sous la forme de deux pignons parallèles. Leur denture est orientée en diagonale par rapport à l'axe de rotation du satellite 112, de façon à leur donner une fonction de rainures dans lesquelles l'huile est entraînée, depuis le milieu du cylindre jusqu'à sa périphérie, pour lubrifier l'engrenage sur toute sa largeur.

Sur cet exemple, les premiers circuits de distribution d'huile 143-144 qui lubrifient les paliers supportant les satellites ont besoin d'acheminer un débit d'huile plus important que les deuxièmes circuits 145-145a-145b. Pour cette raison, l'extension circonférentielle des cuvettes 137a de la première série, qui leur correspondent, est plus importante que celle des cuvettes 137b de la deuxième série. Ici, un rapport de deux tiers à un tiers est recherché dans le débit d'huile en fonctionnement nominal ; l'extension circonférentielle des deux séries de cuvettes 137a, 137b reprend sensiblement ce rapport. L'ensemble a ici été présenté en se référant à une architecture de réducteur 110 à quatre satellites 112 avec des deux séries de circuits de distribution d'huile 143-144, 145-145a-145b de types différents. Pour d'autres architectures de réducteurs, le nombre de cuvettes par série peut être différent. De même le nombre de séries de cuvettes ayant des extensions circonférentielles semblables peut être différent, suivant les types de circuits de distribution d'huile. Par exemple, les deuxièmes circuits de distribution d'huile pourraient être subdivisés en deux, l'un dédié à l'engrenage des pignons des satellites 112 avec le planétaire 111 et l'autre dédié à l'engrenage avec la couronne 114. Dans ce cas, une variante de réalisation du rouet de récupération d'huile est envisageable avec trois séries de cuvettes d'extensions circonférentielles différentes.

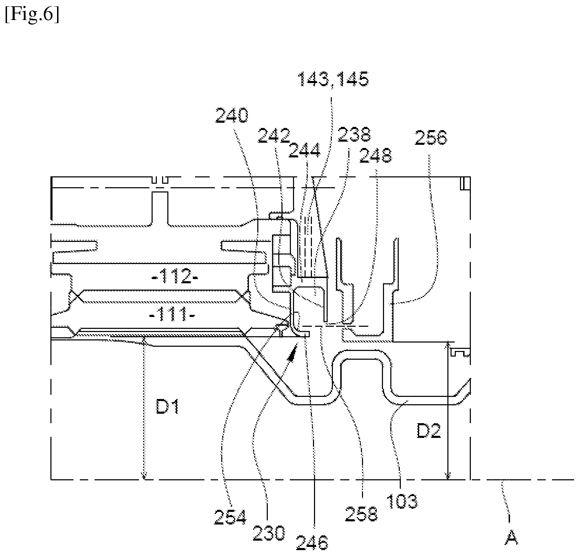

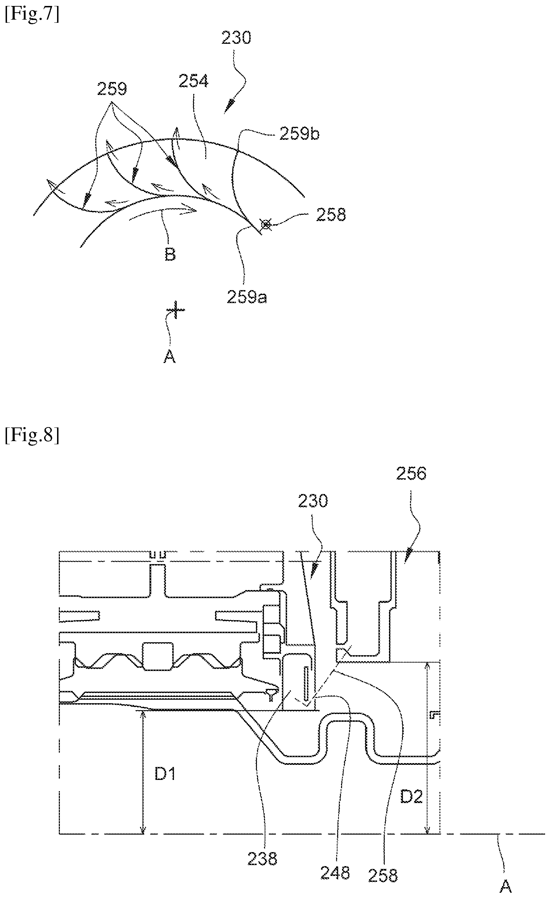

Les figures 6 et 7 illustrent un premier mode de réalisation d'un rouet 230 selon l'invention.

Le rouet 230 comprend des caractéristiques décrites dans ce qui précède et qui sont désignées par les mêmes références aux figures 3 à 5. Il s'agit notamment des canalisations 143 et des canalisations 145

Le rouet 230 a une forme générale annulaire autour de l'axe A précité. Dans l'exemple représenté, le rouet 230 peut être formé d'une seule pièce ou résulter de l'assemblage d'au moins deux pièces.

Le rouet 230 peut comprendre des moyens de support des axes 116 de rotation des satellites du réducteur. Le rouet 230 peut également comporter des moyens de lubrification de dentures des satellites et des paliers des axes 116, qui comportent notamment les canalisations 143, 145 précitées.

Les moyens de lubrification comportent une cavité annulaire 238 située à la périphérie interne du rouet 230 et reliée aux canalisations 143, 145. Les canalisations 143 s'étendent sensiblement radialement entre la cavité 238 et les axes 116 en vue de leur alimentation en huile. Les canalisations 145 s'étendent sensiblement radialement entre la cavité 238 et des orifices de montage de gicleurs ou des canaux 145a, 145b tels que ceux décrits dans ce qui précède en relation avec les figures 3 à 5.

La cavité 238 annulaire est délimitée par deux parois annulaires latérales 240, 242, une paroi périphérique externe de fond 244, et une paroi périphérique interne de fermeture 246.

Les parois 240, 242 s'étendent radialement entre les parois 244, 246. Les extrémités radialement internes des canalisations 143, 145 débouchent sur la paroi 244.

La paroi 246 se situe entre 30% et 100% de la distance entre les parois 240 et 242. Elle peut être alignée ou non avec la surface aval de la cavité annulaire.

La fonction de la paroi 246 est d'éviter que l'huile ressorte de la cavité 238 ; en ce sens, elle peut se présenter comme un bourrelet ou un rebord radial.

Contrairement à la technique antérieure où l'alimentation du rouet 130 est centrifuge, la cavité 238 du rouet 230 est au moins en partie fermée radialement à l'intérieur par la paroi 246 qui s'étend axialement entre les parois 240, 242. La paroi 246 est reliée à la paroi 240 et s'étend radialement à l'intérieur de la paroi 242, à distance radiale de celle-ci. La périphérie interne de la paroi 242 et la paroi 246 définissent ainsi entre elles une lumière annulaire 248 d'alimentation en huile de lubrification de la cavité 238.

La cavité 238 comprend une surface annulaire interne 254 qui est située en regard de la lumière 248. Cette surface 254 est située à la jonction entre les parois 240, 246. En section axiale, cette surface 254 a une forme incurvée dont une concavité est située à l'intérieur de la cavité et en regard de la lumière 248. Il pourrait y avoir un rebord radial entre la surface 254 et la paroi 246, permettant de renvoyer l'huile vers la cavité 238.

La surface 254 peut avoir une dimension axiale représentant entre 30 et 60% de la dimension axiale de la paroi 246. La surface 254 peut avoir une dimension radiale représentant entre 20 et 50% de la dimension radiale de la paroi 240. Par ailleurs, la lumière 248 a une dimension radiale représentant entre 2 et 20% de la dimension radiale de la paroi 242 ou de la cavité 238, et/ou entre 5 et 20% de la dimension radiale de la surface 254. Les traits pointillés des figures 6 et 7 illustrent un jet d'huile 258 projeté par un gicleur 256 fixé à un stator de la turbomachine.

Le jet d'huile 258 est orienté parallèlement à l'axe A et à travers la lumière 248. Ce jet d'huile 258 impacte la surface 254 qui comprend de préférence des ailettes 259 en saillie (figure 7).

Les ailettes 259 sont configurées pour guider l'huile et limiter ses perturbations en fonction du sens B de rotation du rouet 230 autour de l'axe A. Comme dans l'exemple représenté, elles peuvent ainsi être incurvées et comprendre chacune par exemple une extrémité radialement interne 259a orientée tangentiellement par rapport à une circonférence centrée sur l'axe A, et une extrémité radialement externe 259b orientée radialement par rapport à cet axe A.

Les ailettes 259 peuvent être situées sur une paroi attachée à une paroi de la cavité 238. Par rapport à la paroi 240 par exemple, la paroi des ailettes peut s'étendre dans une direction axiale et radiale

Les ailettes ont de préférence pour fonction de guider l'huile de sa direction axiale d'impact à une direction radiale et aussi d'améliorer la pression avec effet centrifuge pour favoriser la remontée de l'huile.

Les ailettes peuvent avoir un profil aubagé. La section entre deux ailettes à l'arrivée du jet axial peut être plus grande que la section en tête.

Les ailettes peuvent avoir une inclinaison variable d'une direction transversale à une direction radiale en s'éloignant de l'axe dans un plan normal à l'axe (cf. figure 7).

La hauteur de l'ailette peut être variable, et peut par exemple diminuer du point d'impact au point de sortie de l'huile.

En variante, l'ailette peut être libre ou attachée à la paroi 242. Dans le cas où elle serait attachée, l'ailette pourrait dépasser de cette paroi, en particulier radialement vers l'intérieur.

Les ailettes peuvent être rapportées soudées ou réalisées par fabrication additive.

Dans le mode de réalisation de la figure 6, le rouet a un diamètre interne D1 sensiblement égal au diamètre D2 d'une circonférence centrée sur l'axe A et passant par l'extrémité radialement interne du gicleur 256, qui est ici orienté sensiblement radialement.

De manière optionnelle, D2 pourrait être inférieur à D1 (de l'ordre de 10% par exemple) pour que le gicleur ne contraigne pas l'intégration par rapport au rouet.

La figure 8 illustre une variante de réalisation du rouet 230 dans lequel le gicleur 256 a une extrémité radialement interne qui est située sur une circonférence dont un diamètre D2 est supérieur au diamètre interne D1 du rouet 230.

Le jet d'huile 258 est inclinée par rapport à l'axe A, dans une direction qui comporte une composante axiale et également une composante radiale. Dans l'exemple représenté, le gicleur 256 est situé en aval du rouet 230 et le jet d'huile 258 est incliné d'aval en amont vers l'axe A.

De manière générale, un rouet de réducteur distribue de l'huile à ce réducteur en se servant des forces centrifuges générées par le porte-satellites qui porte ce rouet. La pression d'huile dans le rouet dépend de la hauteur ou dimension radiale de la colonne d'huile disponible dans le rouet ainsi que de la vitesse de rotation du rouet et du porte-satellites. La hauteur de la colonne d'huile est ici augmentée en diminuant le diamètre interne du rouet, qui n'est pas limité par la présence du gicleur 256. Dans l'exemple représenté, la colonne d'huile du rouet a une hauteur ou dimension radiale R5 qui est nettement supérieure à la hauteur R6 de colonne d'huile de la technique antérieure (figures 5 et 6). La dimension R5 est ici mesurée entre la paroi 246 et les extrémités radialement externes des canalisations 143. L'huile injectée axialement à l'intérieur de la cavité 238 est déviée radialement vers l'extérieur par la surface 254 qui sert de déflecteur.

Dans le cas où le rouet serait réalisé d'une seule pièce, il pourrait être réalisé par fabrication additive. Dans le cas précité où la paroi 242 serait rapportée et fixée, cette paroi 242 pourrait être soudée sur le reste du rouet.

Les gains apportés par le rouet à lubrification axiale sont notamment :
- un encombrement radial réduit de la technologie,
- une augmentation de la pression d'huile dans le rouet (environ +10% d'augmentation au décollage, c'est-à-dire à la vitesse maximale du rouet, dans un cas particulier de réalisation de ce rouet), et
- une meilleure captation de l'huile à faible désalignement (possibilité de diminuer le débit et la quantité d'huile nécessaire au rouet) ; une fois rentrée, l'huile peut être piégée grâce à la faible dimension radiale de la lumière 248 qui est située à la périphérie interne du rouet.

## Revendications

1. Ensemble pour une turbomachine d'aéronef, comprenant :
- un réducteur de vitesse (110) à train épicycloïdal, et
- au moins un gicleur d'huile (256) configuré pour projeter un jet d'huile (258) orienté dans une direction comportant au moins une composante parallèle à un axe longitudinal (A) de la turbomachine,
ledit réducteur comportant un porte-satellites (113) équipé d'un rouet (230) qui est destiné à être solidaire en rotation dudit porte-satellites et à être mis en rotation autour d'un axe A dudit réducteur, ledit rouet ayant une forme annulaire autour dudit axe et comportant des moyens de lubrification (143, 145, 238) notamment de paliers de satellites dudit réducteur, lesdits moyens de lubrification comportant une cavité (238) annulaire située à la périphérie interne dudit rouet, le rouet comportant une paroi périphérique interne (246) de fermeture en direction radiale de ladite cavité (238), le rouet comprenant une lumière (248) annulaire qui s'étend autour dudit axe et qui débouche en direction axiale dans ladite cavité en vue de son alimentation en huile de lubrification par ledit jet d'huile qui est destiné à traverser cette lumière (248), ladite cavité (238) étant délimitée axialement par deux parois latérales (240, 242) annulaires, une première (240) de ces parois étant reliée à sa périphérie interne à ladite paroi de fermeture (246), et la seconde (242) de ces parois comportant ladite lumière (248) ou ayant sa périphérie interne qui est espacée radialement de ladite paroi de fermeture afin de définir ladite lumière (248), et ladite cavité (238) comprenant des ailettes (259) de guidage d'huile, qui sont configurées pour guider l'huile et limiter ses perturbations en fonction du sens de rotation du rouet.

2. Ensemble selon l'une des revendications précédentes, dans lequel ladite cavité (238) comprend une surface annulaire interne (254) ayant en section une forme incurvée dont une concavité est située à l'intérieur de ladite cavité et située axialement en regard de ladite lumière (248), cette surface étant destinée à être impactée par ledit jet d'huile (258).

3. Ensemble selon la revendication 2, dans lequel ladite surface annulaire (254) est située à la jonction entre ladite première paroi (240) et ladite paroi de fermeture (246).

4. Ensemble selon la revendication 2 ou 3, dans lequel les ailettes (259) sont situées au moins sur ladite surface annulaire (254).

5. Ensemble selon l'une des revendications précédentes, dans lequel lesdits moyens de lubrification (143, 145, 238) comportent des canalisations d'huile (143, 145) principalement radiales débouchant dans ladite cavité (238).

6. Ensemble selon la revendication 5, dans lequel au moins certaines des canalisations (143) comprennent des extrémités radiales configurées pour être en communication fluidique avec des cavités internes de lubrification de paliers.

7. Ensemble selon la revendication 5 ou 6, dans lequel lesdites canalisations (143, 145) sont régulièrement réparties autour dudit axe.

8. Ensemble selon l'une des revendications 5 à 7, dans lequel au moins certaines desdites canalisations (145) sont en communication fluidique avec des premières extrémités longitudinales de gicleurs de lubrifiant, qui sont montés en porte-à-faux à la périphérie externe du rouet.

9. Ensemble selon l'une des revendications 5 à 8, dans lequel le rouet comprend des bras radiaux comportant ou portant à leurs extrémités, de préférence radialement externes, des moyens de support des axes des satellites, au moins certaines des canalisations (143, 145) étant formées dans ces bras.

10. Ensemble selon l'une des revendications précédentes, dans lequel lesdites ailettes (259) ont chacune une forme générale incurvée.

11. Ensemble selon la revendication précédente, dans lequel chacune des ailettes comprend une extrémité radialement interne (259a) orientée tangentiellement par rapport à une circonférence centrée sur l'axe (A), et une extrémité radialement externe (259b) orientée radialement par rapport à cet axe (A).

12. Ensemble selon l'une des revendications précédentes, dans lequel ledit au moins un gicleur (256) a une extrémité radialement interne qui est située sur une circonférence dont un diamètre (D2) est supérieur à un diamètre interne (D1) dudit rouet (230), la direction du jet d'huile (258) comportant également une composante radiale de sorte que cette direction soit inclinée par rapport audit axe longitudinal (A).

13. Turbomachine d'aéronef, comportant au moins un ensemble selon l'une des revendications précédentes.

## Patentansprüche

1. Baugruppe für ein Turbotriebwerk eines Luftfahrzeugs, umfassend:
- ein Untersetzungsgetriebe (110) mit Umlaufrädergetriebe, und
- mindestens eine Ölstrahldüse (256), die konfiguriert ist, um einen ausgerichteten Ölstrahl (258) in einer Richtung zu projizieren, die mindestens eine Komponente parallel zu einer Längsachse (A) des Turbotriebwerks umfasst,
wobei das Getriebe einen Planetenträger (113) umfasst, der mit einem Spinnrad (230) ausgestattet ist, das dazu bestimmt ist, drehfest mit dem Planetenträger verbunden zu werden, und um eine Achse A des Getriebes in Drehung versetzt zu werden, wobei das Spinnrad eine ringförmige Form um die Achse herum aufweist, und Schmiermittel (143, 145, 238), insbesondere für die Planetenlager des Getriebes umfasst, wobei die Schmiermittel einen ringförmigen Hohlraum (238) umfassen, der sich am Innenumfang des Spinnrades befindet, wobei das Spinnrad eine Innenumfangswand (246) zum Schließen in radialer Richtung des Hohlraums (238) umfasst, das Spinnrad ein ringförmiges Loch (248) umfasst, das sich um die Achse herum erstreckt, und das in axialer Richtung in den Hohlraum mündet, um von dem Ölstrahl mit Schmieröl versorgt zu werden, der dazu bestimmt ist, dieses Loch (248) zu durchqueren, wobei der Hohlraum (238) axial durch zwei ringförmige Seitenwände (240, 242) begrenzt wird, eine erste (240) dieser Wände an ihrem Innenumfang mit der Wand zum Schließen (246) verbunden ist, und die zweite (242) dieser Wände das Loch (248) umfasst oder ihren Innenumfang aufweist, der radial von der Wand zum Schließen beabstandet ist, um das Loch (248) zu definieren, und der Hohlraum (238) Ölführungsrippen (259) umfasst, die konfiguriert sind, um das Öl zu führen, und dessen Störungen je nach Drehrichtung des Spinnrades zu begrenzen.

2. Baugruppe nach einem der vorstehenden Ansprüche, wobei der Hohlraum (238) eine ringförmige Innenfläche (254) umfasst, die im Querschnitt eine gekrümmte Form aufweist, wovon sich eine Konkavität im Inneren des Hohlraums befindet, und sich axial gegenüber dem Loch (248) befindet, wobei diese Fläche dazu bestimmt ist, von dem Ölstrahl (258) beaufschlagt zu werden.

3. Baugruppe nach Anspruch 2, wobei sich die ringförmige Fläche (254) an der Anschlussstelle zwischen der ersten Wand (240) und der Wand zum Schließen (246) befindet.

4. Baugruppe nach Anspruch 2 oder 3, wobei sich die Rippen (259) mindestens auf der ringförmigen Fläche (254) befinden.

5. Baugruppe nach einem der vorstehenden Ansprüche, wobei die Schmiermittel (143, 145, 238) hauptsächlich radiale Ölkanalisationen (143, 145) umfassen, die in den Hohlraum (238) münden.

6. Baugruppe nach Anspruch 5, wobei mindestens bestimmte der Kanalisationen (143) radiale Enden umfassen, die konfiguriert sind, um in strömungstechnischer Kommunikation mit internen Hohlräumen zur Lagerschmierung zu sein.

7. Baugruppe nach Anspruch 5 oder 6, wobei die Kanalisationen (143, 145) gleichförmig um die Achse herum verteilt sind.

8. Baugruppe nach einem der Ansprüche 5 bis 7, wobei mindestens bestimmte der Kanalisationen (145) in strömungstechnischer Kommunikation mit ersten Längsenden von Schmierstoffstrahldüsen sind, die überhängend am Außenumfang des Spinnrades angebracht sind.

9. Baugruppe nach einem der Ansprüche 5 bis 8, wobei das Spinnrad radiale Arme umfasst, die an ihren vorzugsweise radial äußeren Enden Mittel zum Stützen der Achsen der Planeten umfassen oder tragen, wobei mindestens bestimmte der Kanalisationen (143, 145) in diesen Armen gebildet sind.

10. Baugruppe nach einem der vorstehenden Ansprüche, wobei die Rippen (259) jeweils eine allgemeine gekrümmte Form aufweisen.

11. Baugruppe nach dem vorstehenden Anspruch, wobei jede der Rippen ein radial inneres Ende (259a) umfasst, das in Bezug auf einen auf die Achse (A) zentrierten Umfang tangential ausgerichtet ist, und ein radial äußeres Ende (259b), das in Bezug auf diese Achse (A) radial ausgerichtet ist.

12. Baugruppe nach einem der vorstehenden Ansprüche, wobei die mindestens eine Strahldüse (256) ein radial inneres Ende aufweist, das sich auf einem Umfang befindet, von dem ein Durchmesser (D2) größer als ein Innendurchmesser (D1) des Spinnrades (230) ist, wobei die Richtung des Ölstrahls (258) auch eine radiale Komponente umfasst, sodass diese Richtung in Bezug auf die Längsachse (A) geneigt ist.

13. Turbotriebwerk eines Luftfahrzeugs, das mindestens eine Baugruppe nach einem der vorstehenden Ansprüche umfasst.

## Claims

1. An assembly for an aircraft turbomachine, comprising:
- an epicyclic gear speed reducer (110), and
- at least one oil sprinkler (256) configured to spray an oil jet (258) oriented in a direction comprising at least one component parallel to a longitudinal axis (A) of the turbomachine,
said reducer comprising a planet carrier (113) equipped with an impeller (230) which is intended to be secured in rotation with said planet carrier and to be rotated about an axis A of said reducer, said impeller having an annular shape about said axis and comprising means (143, 145, 238) for lubricating, in particular, planet gears bearings of said reducer, said lubrication means comprising an annular cavity (238) located at the internal periphery of said impeller, the impeller comprising an internal peripheral wall (246) for closing off said cavity (238) in the radial direction, the impeller comprising an annular port (248) which extends around said axis and which opens out in the axial direction into said cavity for the purpose of being supplied with lubricating oil by said oil jet which is intended to pass through this port (248),
said cavity (238) being axially delimited by two annular side walls (240, 242), a first (240) of these walls being connected at its internal periphery to said closure wall (246) and the second (242) of these walls comprising said port (248) or having its internal periphery radially spaced from said closure wall in order to define said port (248), and said cavity (238) comprising oil guiding fins (259), which are configured to guide the oil and limit its disturbance depending on the direction of rotation of the impeller.

2. The assembly according to one of the preceding claims, wherein said cavity (238) comprises an internal annular surface (254) having a curved shape in cross-section, a concavity of which is located inside said cavity and located axially opposite said port (248), this surface being intended to be impacted by said oil jet (258).

3. The assembly of claim 2, wherein said annular surface (254) is located at the junction between said first wall (240) and said closure wall (246).

4. The assembly of claim 2 or 3, wherein the fins (259) are located at least on said annular surface (254).

5. The assembly according to any one of the preceding claims, wherein said lubrication means (143, 145, 238) comprise predominantly radial oil pipelines (143, 145) opening into said cavity (238).

6. The assembly of claim 5, wherein at least some of the pipelines (143) comprise radial ends configured to be in fluidic communication with internal bearing lubrication cavities.

7. The assembly according to claim 5 or 6, wherein said pipelines (143, 145) are evenly distributed about said axis.

8. The assembly of any of claims 5 to 7, wherein at least some of said pipelines (145) are in fluidic communication with first longitudinal ends of lubricant sprinklers, which are cantilevered to the external periphery of the impeller.

9. The assembly according to any one of claims 5 to 8, wherein the impeller comprises radial arms comprising or carrying at their ends, preferably radially external, means for supporting the axles of the planet gears, at least some of the pipelines (143, 145) being formed in these arms.

10. The assembly of any of the preceding claims, wherein said fins (259) each have a generally curved shape.

11. The assembly according to the preceding claim, wherein each of the fins comprises a radially internal end (259a) oriented tangentially with respect to a circumference centred on the axis (A), and a radially external end (259b) oriented radially with respect to that axis (A).

12. The assembly according to any of the preceding claims, wherein said at least one sprinkler (256) has a radially internal end that is located on a circumference having a diameter (D2) greater than an internal diameter (D1) of said impeller (230), the direction of the oil jet (258) also comprising a radial component so that this direction is inclined with respect to said longitudinal axis (A).

13. An aircraft turbomachine, comprising at least one assembly according to one of the preceding claims.
